# EUROPÄISCHE PATENTSCHRIFT

(11) **EP 3 810 394 B1**
(45) Veröffentlichungstag und Bekanntmachung des Hinweises auf die Patenterteilung: **31.08.2022**
(21) Anmeldenummer: 19736601.6
(22) Anmeldetag: 14.06.2019
(51) Int. Cl.: B29C 45/76, G01N 11/00, G01N 11/08

(54) **SPRITZGIESSMASCHINE ZUR ONLINE-ERFASSUNG DER RHEOLOGIE VON THERMOPLASTISCHEM UND/ODER ELASTOMEREM MATERIAL ZUR HERSTELLUNG VON SPRITZGUSSTEILEN**
INJECTION MOULDING MACHINE FOR THE ONLINE SENSING OF THE RHEOLOGY OF THERMOPLASTIC AND/OR ELASTOMER MATERIAL FOR THE PRODUCTION OF INJECTION-MOULDED PARTS
MACHINE DE MOULAGE PAR INJECTION POUR LA DÉTERMINATION EN LIGNE DE LA RHÉOLOGIE D'UN MATÉRIAU THERMOPLASTIQUE ET/OU ÉLASTOMÈRE DESTINÉ À LA FABRICATION DE PIÈCES MOULÉES PAR INJECTION

(30) Priorität: 21.06.2018 DE 102018114974
(43) Veröffentlichungstag der Anmeldung: 28.04.2021
(73) Patentinhaber: Klöckner Desma Elastomertechnik GmbH, 78567 Fridingen (DE)
(72) Erfinder: ZEBEDIN, Harald, 78333 Stockach (DE)
(74) Vertreter: Schneiders & Behrendt Bochum
(86) Internationale Anmeldenummer: PCT/EP2019/065673
(87) Internationale Veröffentlichungsnummer: WO 2019/243185

(56) Entgegenhaltungen:
- EP-A2- 2 380 724
- WO-A1-2012/038769
- DE-A1-102007 030 637
- JP-A- 2011 240 631
- US-A1- 2013 255 371
- US-B2- 8 329 075

## Beschreibung

Die Erfindung betrifft eine Spritzgießmaschine zur Online-Erfassung der Rheologie von thermoplastischem und/oder elastomerem Material zur Herstellung von Spritzgussteilen, wobei in der Spritzgießmaschine zwischen deren feststehender und deren beweglicher Aufspannplatte anstelle eines Formwerkzeugs ein Messwerkzeug angeordnet wird, wobei das Messwerkzeug einen Messkanal aufweist, in dessen Verlauf mindestens zwei Drucksensoren und mindestens zwei Temperaturfühler angeordnet sind.

Als Grundidee sollen die Viskosität insbesondere von Rohkautschukmischungen sowie andere materialspezifische Parameter unter einer Vorbehandlung und bei einer Scherung ermittelt werden, die den Gegebenheiten im Spritzgussprozess entspricht. Um dies zu ermöglichen, wird die Spritzgießmaschine mit einem formähnlichen Aufbau ausgestattet, der einen Messkanal mit verschiedenen Sensoren enthält. In dem Schlitz findet ein definierter Fließprozess statt, der über die Sensoren vermessen wird. Aus den Messdaten können rheologische Kennwerte erhalten

Es ist zwar aus einem Artikel von G. Ausias, C. Mobuchon, P. J. Carreau, M.-C.Heuzey, M. Sepehr, "Extensional Properties auf short glass fiber reinforced Polypropylene", Polymer Komposite, 2005,247, bereits bekannt, durch Messung des Druckabfalls in einem Messkanal und durch zusätzliche Messung der entsprechenden Temperaturen Polypropylenmaterial auf seine rheologischen Eigenschaften hin zu testen, wobei zwischen der feststehenden und der beweglichen Aufspannplatte einer Spritzgießmaschine ein entsprechendes Messwerkzeug eingebaut wurde, in dessen Messkanal das Polypropylenmaterial eingefüllt wurde, der Verlauf innerhalb des Kanals durch Drucksensoren und Temperaturfühler analysiert wurde und das Material am gegenüberliegenden Ende der des Kanals austreten konnte. Die ermittelten Messdaten wurden in einer externen Auswertevorrichtung ("Lab View-Setup") ausgewertet.

Nachteilig bei dieser Vorrichtung ist es daher, dass die ermittelten Daten für den eigentlichen Spritzgießvorgang zur Herstellung von Spritzgussteilen nicht direkt zur Verfügung steht und auch nicht gewährleistet ist, dass mithilfe dieser Apparatur auch elastomere Werkstoffe getestet werden können.

Speziell Rohgummi wird in einem diskontinuierlichen Verfahren (i. d. R. Innenmischer) die endgültig zu verarbeitende Form gebracht ("fertig gemischt"). Dies und Schwankungen in der Rohstoffqualität führen zu hohen Schwankungen in den Eigenschaften der Rohmasse von Charge zu Charge und der daraus z. B. im Elastomer-Spritzguss hergestellten Formteile. Daher ist es seit jeher ein Anliegen der Verarbeiter diese Eigenschaftsschwankungen zu bestimmen und daraus eine bestimmte Charge entweder zu sperren, zu verwenden oder die Verarbeitungs-oder Nachbehandlungsschritte anzupassen.

Typischerweise werden dafür heute folgende Methoden herangezogen:
- Vulkametrie
- Mooney-Viskosimetrie / RPA-Messung
- Dichteprüfung (keine rheologisch relevante Größe)
- IR-Spektroskopie (keine rheologisch relevante Größe)

Und seltener
- Meßkneter

-(Hochdruck-) Kapillarviskosimeter (HDKV)
- Defo-Prüfung.

Alle diese Methoden haben den Nachteil, dass sie die Fließfähigkeit der Mischung nicht oder nur unzureichend im Hinblick auf den eigentlichen Spritzgussprozess charakterisieren. Folgende Gründe sind in der Literatur diskutiert worden:
- Falscher Scherratenbereich

Im Spritzguss wird das Material sehr hohen Scherraten im Bereich 100-10.000 1/s ausgesetzt.

Die oben genannten Verfahren arbeiten vor allem im Bereich von unter 1000 1/s und im Fall von HDKV über 1000 1/s nicht mit dem Standardverfahren. Die Eigenschaften im relevanten Bereich werden also nur teilweise erfasst.
- Andere Vorbehandlung des Materials (Thermo-rheologische Geschichte)

In der Spritzgießmaschine wird das Material mithilfe der Schnecke plastifiziert und so vorgeschert und gleichzeitig auf eine homogene Verarbeitungstemperatur im Bereich von 80 °C gebracht. Die Vorscherung bricht z. B. Füllstoffagglomerate auf und stellt eine homogene Schmelze her. Bei den o. g. Methoden ist dies nicht der Fall. Das Material wird kalt eingelegt und nicht plastifiziert.
- Test Ort und Zeitpunkt

Die Untersuchung sollte möglichst nah an der Stelle der Verwendung (gleiche Umgebungsbedingungen) und zur Zeit der Verarbeitung durchgeführt werden. Dies ist bei Labortests wie oben genannt in der Regel nicht der Fall. Die Charge wird z. B. bei Anlieferung getestet und dann für zwei Monate freigegeben.
- Schererwärmung

Bei den Methoden im höheren Scherratenbereich erwärmt sich die Mischung während des Tests in der Regel unkontrolliert jenseits der Solltemperatur. Daher werden keine absoluten Messwerte erhalten, die bei Übertragung auf den Spritzgießprozess zu großen Abweichungen führen können.
- Rheologische Sondereffekte

Eine Reihe von speziellen Effekten der Rheologie ist bei der Verarbeitung von Gummi im Spritzguss relevant, wird aber bei der Charakterisierung i. d. R. nicht untersucht. Dazu zählen Wandgleiten, Ein-und Auslaufdruckverlust /elastische Effekte /Dehnströmungen, Druckabhängigkeit der Viskosität.
- Hohe Investitionen in Geräte

Die genannten Labormessgeräte kosten jeweils in der Größenordnung von 100.000 € und stellen somit eine erhebliche Investition dar.

Um diese Nachteile zu beheben, ist eine neue Messmethode für den Einsatz in der Produktion wünschenswert. Zu diesem Zweck wurde bereits mehrfach in der bestehenden Literatur die Verwendung der verarbeitenden Spritzgießmaschine selbst als Messinstrument diskutiert. Mit Anpassungen hinsichtlich der Materialfließstrecke, der Sensorik und der Auswertung können die (meisten) der oben genannten Nachteile behoben werden. Unter Verwendung einer passenden Materialführungsstrecke können sehr hohe Scherraten bis 10.000/s erreicht werden. Der dafür nötige Druck steht in der Spritzgießmaschine typischerweise zur Verfügung. Die Vorbehandlung findet genauso statt wie in der eigentlichen Verarbeitung, da dieselbe Spritzeinheit und Schnecke verwendet werden. Der Ort ist in der Produktion und der Testzeitpunkt kann günstig gewählt werden, wenn die Produktion tatsächlich in der Fertigung anläuft. Rheologische Sondereffekte entsprechen den tatsächlichen Gegebenheiten, die in der Spritzeinheit bei der Verarbeitung vorgefunden werden, und es müssen keine Annahmen oder Transfers vorgenommen werden. Damit ist die Entwicklung eines solchen Verfahrens wünschenswert.

In der Druckschrift US 2013/0255371 A1 wird eine Spritzgießmaschine offenbart, in der eine Vielzahl von Messkanälen integriert werden kann.

Auch die Druckschriften US 8,329,075 B2, WO 2012/038769 A1 und in JP 2011-240631 offenbaren Spritzgussmaschinen, in denen Messvorrichtungen mit einem Messkanal integriert werden können.

Wie der Messkanal zentriert und exakt positioniert wird, lassen die Schriften jedoch offen. Wünschenswert ist, dass der Messkanal auf einfache und sichere Art und Weise zentriert und exakt positioniert werden kann, sodass eine exakte Qualitätsüberprüfung des verwendeten Spritzgussmaterials ermöglicht wird, ohne dass das Messergebnis durch Ungenauigkeiten bei der Anordnung des Messkanals verfälscht wird.

Erfindungsgemäß wird eine Standard-Elastomer-Spritzgießmaschine mit einem formähnlichen Aufbau ausgestattet, der einen (rechteckigen) Schlitz als Messkanal mit Druck-und Temperatursensoren enthält. In dem Schlitz findet ein definierter Fließprozess statt, der über die Sensoren vermessen wird. Aus den Messdaten können direkt in der Steuerung der Spritzgießmaschine (der sogenannten SPS) die rheologischen Kennwerte erhalten werden. Das Material wird in der Spritzeinheit der Maschine plastifiziert und durch den schlitzartigen Kanal ins Freie gespritzt. Die Technologie soll für kohlenstoffbasierte Elastomere und feste sowie flüssige Silikonelastomere (ATV und LSR) Verwendung finden.

Die Messeinrichtung wird in der Produktion verwendet, jedoch nicht während der Produktion. Sie ersetzt die Serienform. Ein Umbau ist damit jeweils nötig.

Das Messprinzip ist folgendes: Material wird nach dem Plastifizieren über einen geeigneten Einlauf in die Schlitzkapillare mit rechteckigem Querschnitt geführt und dort rein viskos geschert. Über zwei oder mehr Drucksensoren, die bündig in die Schlitzwand eingebracht sind, wird der Druckabfall entlang des Schlitzes gemäß. Aus dem Druckabfall und der Geometrie des Schlitzes wird analog dem Gesetz von Hagen-Poiseuille die Viskosität berechnet. Das Messprinzip entspricht im Prinzip dem eines Kapillarviskosimeters.

Dadurch, dass die Messdaten der Druck- und Temperatursensoren direkt von der der Spritzgießmaschine eigenen SPS verarbeitet werden, kann auf die oben genannten Labormessgeräte, die erheblich teurer sind, verzichtet werden. Die teuren Komponenten wie Antrieb/Druck -erzeugung, Steuerung und Materialzuführung sind in einer Spritzgießmaschine bereits vorhanden, sodass nur die Messfähigkeit für einen Teil des Preises nachgerüstet werden muss.

Bei diesem Verfahren wird nun das folgende erfindungsgemäße Messwerkzeug in der Spritzgießmaschine eingesetzt:
Es besteht aus zwei Montageplatten, von denen die eine als Einlaufplatte bezeichnet wird und an der feststehenden Aufspannplatte befestigt wird. In der feststehenden Aufspannplatte ist ein Angusskanal vorgesehen, über den das Einspritzaggregat das zu testende Material über eine Öffnung in der Einlaufplatte in das Messwerkzeug einbringt. Die Öffnung in der Einlaufplatte ist dabei so gestaltet, dass der runde Angusskanalquerschnitt auf den rechteckigen Querschnitt des im Messwerkzeug vorhandenen Messkanals umgesetzt wird. Dabei wird, um Totstellen zu vermeiden und eine laminare Strömung sicherzustellen, der Querschnitt der Öffnung in der Einlaufplatte auf die Schlitzbreite erweitert und bei weiterhin gleicher Höhe diese dann auf die entsprechende Schlitzhöhe reduziert. Die Übergänge werden dabei gleichmäßig und gerundet gestaltet.

Der rechteckförmige Messkanal ist in einem Gehäuse untergebracht, welches zwischen den beiden Montageplatten angeordnet ist und aus einem ersten zweiteiligen konisch zulaufenden inneren, den Messkanal bildenden Teil und einem zum inneren Teil komplementären, das innere Teil umschließenden äußeren Teil besteht, wobei im inneren Teil mindestens zwei Drucksensoren sowie mindestens zwei Temperaturfühler derart angeordnet sind, dass zumindest die Messmembranen der Drucksensoren bündig mit der Innenwand des Messkanals abschließen.

Das äußere Gehäuseteil ist außen zylindrisch gestaltet und hat innen eine Öffnung, die konisch in Richtung der festen Aufspannplatte zuläuft. Die Aussparung innen entspricht der eines Kegelstumpfes. Aufgabe dieses Bauteils ist die Zentrierung des inneren Gehäuseteils. In diesem inneren Gehäuseteil ist der Messkanal angeordnet. Er besitzt die äußere Form eines Kegelstumpfes. Er besteht aus zwei Hälften, die erlauben, den Messkanal z. B. zur Reinigung zu öffnen. Jede Hälfte enthält eine Seite des Messkanals der Länge nach geteilt, jedoch leicht asymmetrisch. Auf der Drucksensorseite ist die Höhe des Messkanals (beispielsweise 1,5 mm) gleich, während die Gegenseite variabel ist und entweder eine Höhe von beispielsweise 0,5 mm (asymmetrisch) oder 1,5 mm (symmetrisch) hat. In einer Hälfte des inneren Gehäuseteils sind beispielsweise drei Bohrungen zur Montage von Drucksensoren eingebracht. Die Bohrungen sind so angelegt, dass die Messmembran des Drucksensors front- bündig mit der Kanalwand abschließt. Ein Absatz, der (beispielsweise ca. 5 mm) tiefer in der Bohrung liegt, bildet die Dichtkante, und ein Gewinde an der Wand weiter hinten erlaubt das Befestigen des Sensors mit einer Kontermutter. Am Außenumfang des Halbkegelstumpfes ist oberhalb der Bohrung etwas Material abgenommen, um die Messleitungen der Sensoren nach außen führen zu können. Am Ende des Messkanals ist eine Öffnung ins Freie, in die das Testmaterial entweichen und anschließend mit der Hand entnommen werden kann. Die Innenseiten des Halbkegelstumpfes sind außerhalb des Messschlitzes plan, um eine glatte Verbindung zueinander herstellen zu können. Das Bauteil wird auf die der Einlaufplatte gegenüber liegenden Montageplatte (Aufnahmeplatte) geschraubt und in der Regel nicht zum Reinigen entfernt, wegen der empfindlichen Verkabelung der Drucksensoren.

Den Drucksensoren gegenüber sind in der anderen Hälfte des den Messkanal bildenden Halbkegelstumpfes Bohrungen zur Aufnahme von beispielsweise drei Temperatursensoren vorgesehen. Auch diese werden frontbündig zur Messkanalwand eingebracht. Dieser Halbkegelstumpf wird mit dem die Drucksensoren enthaltenen Halbkegelstumpf verschraubt, jedoch nicht mit der Aufnahmeplatte, um während der Messung Stabilität zu gewährleisten und diese Hälfte zur Reinigung entfernen zu können.

Die Aufnahmeplatte dient zur Befestigung der beiden Halbkegelstümpfe an der beweglichen Aufspannplatte der Schließeinheit. Die beiden Halbkegelstümpfe werden dadurch zueinander ausgerichtet. Der Halbkegelstumpf der Drucksensorseite ist in einer Vertiefung zur Zentrierung eingelassen und mit der Aufnahmeplatte von hinten verschraubt.

Der Gesamtaufbau wird über die T-Nuten in den Aufspannplatten der Spritzgießmaschine befestigt und über die Düsenspitze zentriert. Die einzelnen Bauteile werden über Kegelzentrierung zueinander zentriert.

Die Heizung wird zum einen über die Heizplatten der Spritzgießmaschine analog zu einem Formgebungswerkzeug durchgeführt. Zum anderen über ein Heizband, das um das äußere Gehäuseteil gelegt wird, um eine größtmögliche Temperaturhomogenität zu erreichen. Das Heizband wird an ein Zusatzheizungsmodul der Spritzgießmaschine angeschlossen.

Die Signale aller notwendigen Sensoren werden zur zentralen Maschinensteuerung (SPS) geführt und dort ausgewertet. Aus der Spritzgießmaschine selbst wird der Weg des Spritzkolbens aufgezeichnet. Dieser wird über einen Wegmessstab erfasst und über CAN-Bus an die Maschinensteuerung übertragen. Dies geschieht wie im normalen Betrieb der Spritzgießmaschine.

Als Drucksensoren werden solche verwendet, die beispielsweise nach dem piezoelektrischen Prinzip messen und das Signal über eine Ader ("single wire") an einen Anschluss an der Oberfläche der Messeinrichtung. Die Rückführung erfolgt über die Messeinrichtung zum Sensor. Von der Übergabestelle an der Einrichtungsoberfläche wird das Signal über ein geschirmtes Kabel zum Messverstärker übertragen. Der Messverstärker ist entweder an einem Verkleidungsblech der Schließeinheit oder im Maschinenschaltschrank lokalisiert. Im Verstärker wird das Signal in ein Stromsignal umgesetzt und über einfache Verkabelung an einen analogen Eingang der Steuerung geführt. Dort wird das Signal digitalisiert und dem Steuerungsprogramm zur Verfügung gestellt. Im Fall der Temperatursensoren wird das Signal über ein zum Thermopaar passendes Kabel direkt zur Steuerung geführt und dort auf einem entsprechenden analogen Eingang aufgezeichnet und digitalisiert.

Vor einer Messung wird der Messaufbau zusammengesetzt, verschraubt und in die Maschine eingebaut und angeschlossen. Die Spritzeinheit und der Aufbau werden auf eine einheitliche Messtemperatur temperiert, z.B. 80 °C. Die Elastomermischung wird als Streifen der Spritzeinheit zugeführt und mindestens dreimal aufdosiert und durch die Düsenspitze ins Freie gespritzt (nicht in den Messaufbau).

Anschließend wird die Spritzeinheit an den Aufbau gefahren und beispielsweise 500 ccm dosiert. Es wird mit einer konstanten, niedrigen Spritzgeschwindigkeit durch den Messkanal gespritzt und dabei Druck, Temperatur und Weg aufgezeichnet bis
(a) der im Messspalt gemessene Druck konstant ist oder
(b) ) das Volumen verbraucht ist, wobei in diesem Fall die Druckänderung auf einen konstanten Enddruck extrapoliert werden muss (exponentiell).

Es wird gewartet bis die Temperatur im Messkanal wieder in einem Intervall von 2 °C um die Solltemperatur liegt. Es wird wieder auf 500 ccm aufplastifiziert. Dann wird der Versuch mit einer höheren Geschwindigkeit wiederholt, um Daten bei einer höheren Scherrate zu erhalten. Dies wird in aufsteigender Reihenfolge für den Scherratenbereich von Interesse eingestellt (Messpunkte logarithmisch gleich verteilt, typisch fünf Punkte pro Dekade). Der erste Messpunkt wird am Ende der Messreihe wiederholt, um auf Drift oder (An-) Vulkanisation zu prüfen. Anschließend wird der Versuch bei anderen Temperaturen wiederholt.

Die Erfindung wird im Folgenden anhand von Zeichnungen erläutert und dargestellt

Es zeigen:
- Fig. 1:: schematische Darstellung einer Spritzgießmaschine,
- Fig. 2:: Messwerkzeug im Schnitt,
- Fig.3:: Messwerkzeug perspektivisch im Ausschnitt

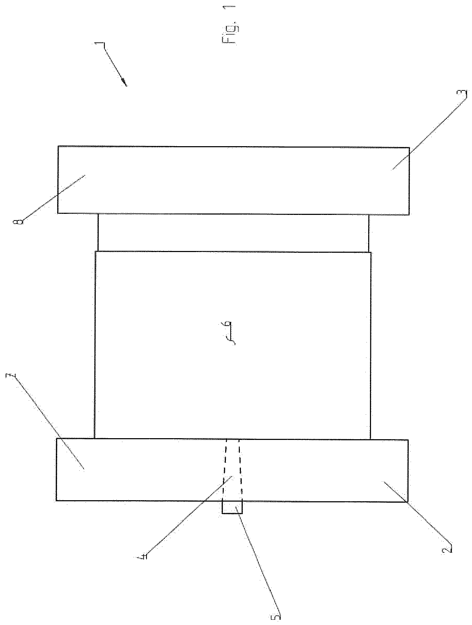

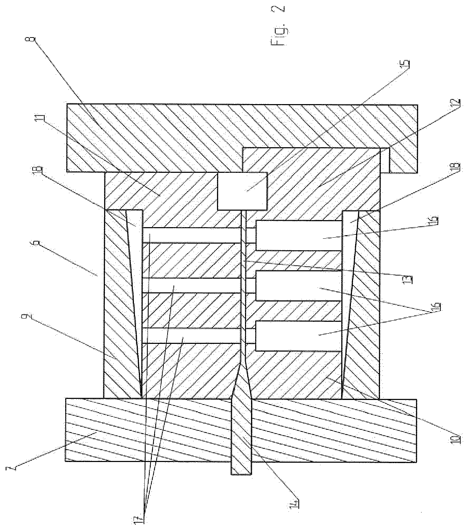

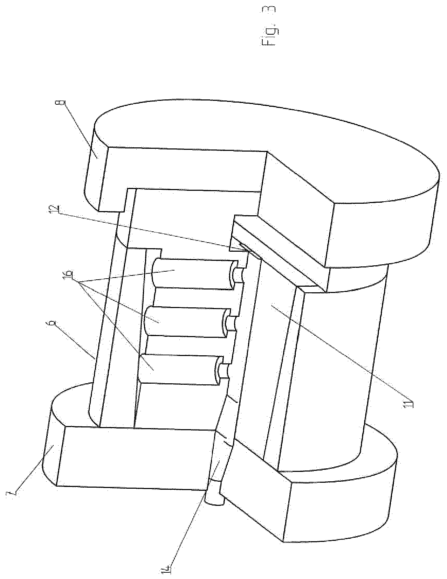

In der Figur 1 ist sehr schematisiert der prinzipielle Aufbau einer horizontal arbeitenden Spritzgießmaschine dargestellt und allgemein mit dem Bezugszeichen 1 versehen. Dargestellt ist die feststehende Aufspannplatte 2 sowie die relativ zu dieser Aufspannplatte 2 bewegliche Aufspannplatte 3. In der feststehenden Aufspannplatte 2 ist ein Angusskanal 4 vorgesehen, in dem die ebenfalls schematisiert dargestellte Einspritzeinheit 5 anliegt. Die für die Verfahrbewegung der beweglichen Aufspannplatte 3 und den Schließdruckaufbau verantwortliche Schließeinheit ist aus Übersichtlichkeitsgründen nicht dargestellt. Zwischen der feststehenden Aufspannplatte 2 und der beweglichen Aufspannplatte 3 ist ein mit dem Bezugszeichen 6 bezeichnetes und in den Figuren 2 und 3 näher erläutertes Messwerkzeug eingebaut. Das Messwerkzeug 6 ist mittels der Montageplatten 7 und 8, von denen die Montageplatte 7 als Einlaufplatte bezeichnet wird und die Montageplatte 8 als Aufnahmeplatte.

In den Figuren 2 und 3 ist das Messwerkzeug 6 detaillierter dargestellt. Das Messwerkzeug 6 besteht aus zwei Gehäuseteilen 9 und 10. Das äußere Gehäuseteil 9 ist außen zylinderförmig gestaltet, während innen eine Öffnung existiert, die konisch in Richtung der festen Aufspannplatte 2 zuläuft. Dieses Gehäuseteil 9 ist an die Montageplatte 7 anmontiert. In die konische Öffnung des Gehäuseteils 9 wird das zweiteilige innere Gehäuseteil 10, welches an der Montageplatte 8 befestigt ist und im Prinzip zum Gehäuseteil 9 komplementär aufgebaut ist, eingeführt. Somit dient das äußere Gehäuseteil 9 als Zentrierung für das Gehäuseteil 10. Die beiden Teile des Gehäuseteils 10 sind als Kegelstumpfhälften 11 und 12 aufgebaut und schließen im zusammengebauten Zustand zwischen sich einen im Querschnitt rechteckigen Messkanal 13 ein. Der Messkanal 13 steht über eine Öffnung 14 in der Montageplatte 7 mit der Angussöffnung 4 in der festen Aufspannplatte 2 in Verbindung. Der Messkanal 13 führt an seinem gegenüberliegenden Ende bei 15 ins Freie.

In der Kegelstumpfhälfte 12 sind hintereinander drei Drucksensoren 16 eingebaut, deren Druckmessmembranen frontbündig mit der Messkanalwand abschließen. In der Kegelstumpfhälfte 11 sind den Drucksensoren 16 gegenüberliegend Temperaturfühler 17 eingebaut, die ebenfalls frontbündig zur Messkanalwand abschließen. Am Außenumfang des jeweiligen Halbkegelstumpfes ist oberhalb der die Sensoren aufnehmenden Bohrungen etwas Material abgenommen, um die Messleitungen der Sensoren nach außen führen zu können. Diese Bereiche sind mit dem Bezugszeichen 18 versehen.

Die in der Einlaufplatte 7 vorgesehene Öffnung 14 ist so ausgestaltet, dass sie vom runden Querschnitt des Angusskanals 4 zum rechteckigen Querschnitt des Messkanals überleitet. Der die Drucksensoren 16 aufnehmende Halbkegelstumpf 12 ist in einer Vertiefung in der Aufnahmeplatte 8 zur Zentrierung eingelassen und mit der Aufnahmeplatte von hinten verschraubt (nicht dargestellt). Die Kegelstumpfhälfte 11 ist nicht an der Aufnahmeplatte 8 befestigt sondern mit der Kegelstumpfhälfte 12 verschraubt und zwar aus Gründen der Stabilität und damit diese einfacher zur Reinigung des Messkanals 13 entfernt werden kann.

## Patentansprüche

1. Spritzgießmaschine zur online-Erfassung der Rheologie von thermoplastischem und/oder elastomerem Material zur Herstellung von Spritzgussteilen, mit einem Einspritzaggregat (5), einer feststehenden Aufspannplatte (2), einer beweglichen Aufspannplatte (3) sowie einer Schließvorrichtung, wobei zwischen der feststehenden und der beweglichen Aufspannplatte ein Messwerkzeug (6) angeordnet ist, welches über einen Messkanal (13) verfügt, der über einen Angusskanal (4) in der feststehenden Aufspannplatte (2) durch das Einspritzaggregat (5) mit thermoplastischem und/oder elastomerem Material beaufschlagbar ist, wobei der Messkanal (13) an seinem dem Einspritzaggregat (5) gegenüberliegenden Ende (15) offen ausgebildet ist,
**dadurch gekennzeichnet, dass** der Messkanal (13) von einem Gehäuse (9, 10) umgeben ist, welches zwischen zwei Montageplatten (7, 8) angeordnet ist und aus einem ersten zweiteiligen konisch zu- laufenden inneren , den Messkanal (13) bildenden Teil (10) und einem zum inneren Teil (10) komplementären, das innere Teil (10) umschließenden äußeren Teil (9) besteht, wobei im inneren Teil (10) mindestens zwei Drucksensoren (16) sowie mindestens zwei Temperaturfühler (17) derart angeordnet sind, dass zumindest die Messmembranen der Drucksensoren (16) bündig mit der Innenwand des Messkanals (13) abschließen.

2. Spritzgießmaschine nach Anspruch 1, **dadurch gekennzeichnet, dass** der Messkanal (13) als Schlitzkapillare mit rechteckigem Querschnitt ausgebildet ist.

3. Spritzgießmaschine nach einem der Ansprüche 1 oder 2, **dadurch gekennzeichnet, dass** die Trennlinie der beiden Teile (11, 12) des ersten konisch zulaufenden inneren Teils(10) des Gehäuses entlang dem Messkanal (13) verläuft.

4. Spritzgießmaschine nach einem der Ansprüche -1-3, **dadurch gekennzeichnet, dass** der Übergang vom Angusskanal (4) in den Messkanal (13) in der entsprechenden Montageplatte (7) flussoptimiert ausgebildet ist.

5. Spritzgießmaschine nach einem der Ansprüche 1-4, **dadurch gekennzeichnet, dass** die Drucksensoren (16) den Temperaturfühlern (17) gegenüberliegend angeordnet sind.

6. Spritzgießmaschine nach einem der Ansprüche 1-5, **dadurch gekennzeichnet, dass** der innere Teil (10) des Gehäuses an die Montageplatte (8) anmontiert ist, welche auf der beweglichen Aufspannplatte (3) befestigt ist und der äußere Gehäuseteil (9) an der mit der feststehenden Aufspannplatte (2) verbundenen Montageplatte (7).

## Claims

1. Injection moulding machine for the online sensing of the rheology of thermoplastic and/or elastomeric material for the production of injection-moulded parts, having an injection unit (5), a stationary platen (2), a movable platen (3) and a closing device, wherein there is arranged between the stationary platen and the movable platen a measuring tool (6) which has a measuring channel (13) to which thermoplastic and/or elastomeric material can be admitted by the injection unit (5) via a runner (4) in the stationary platen (2), wherein the measuring channel (13) is configured to be open at its end (15) opposite the injection unit (5),
**characterised in that** the measuring channel (13) is enclosed by a housing (9, 10) which is arranged between two mounting plates (7, 8) and consists of a first, two-part, conically tapering inner part (10) forming the measuring channel (13) and an outer part (9) which is complementary to the inner part (10) and encloses the inner part (10), wherein at least two pressure sensors (16) and at least two temperature probes (17) are arranged in the inner part (10) such that at least the measuring diaphragms of the pressure sensors (16) are flush with the inside wall of the measuring channel (13).

2. Injection moulding machine according to claim 1, **characterised in that** the measuring channel (13) is in the form of a slit capillary of rectangular cross-section.

3. Injection moulding machine according to either claim 1 or claim 2, **characterised in that** the dividing line between the two parts (11, 12) of the first conically tapering inner part (10) of the housing runs along the measuring channel (13).

4. Injection moulding machine according to any one of claims 1 to 3, **characterised in that** the transition from the runner (4) into the measuring channel (13) is formed in the corresponding mounting plate (7) in a flow-optimised manner.

5. Injection moulding machine according to any one of claims 1 to 4, **characterised in that** the pressure sensors (16) are arranged opposite the temperature probes (17).

6. Injection moulding machine according to any one of claims 1 to 5, **characterised in that** the inner part (10) of the housing is mounted on the mounting plate (8) that is fastened to the movable platen (3), and the outer housing part (9) is mounted on the mounting plate (7) that is connected to the stationary platen (2).

## Revendications

1. Machine de moulage par injection pour la détection en ligne de la rhéologie d'un matériau thermoplastique et/ou élastomère pour la fabrication de pièces moulées par injection, comprenant un groupe d'injection (5), une plaque de serrage fixe (2), une plaque de serrage mobile (3) ainsi qu'un dispositif de fermeture, entre la plaque de serrage fixe et la plaque de serrage mobile étant agencé un outil de mesure (6) qui dispose d'un canal de mesure (13) qui peut être alimenté en matériau thermoplastique et/ou élastomère par le groupe d'injection (5) par l'intermédiaire d'un canal d'injection (4) dans la plaque de serrage fixe (2), le canal de mesure (13) étant configuré sous forme ouverte à son extrémité (15) opposée au groupe d'injection (5),
**caractérisée en ce que** le canal de mesure (13) est entouré d'un boîtier (9, 10) qui est agencé entre deux plaques de montage (7, 8) et qui consiste en une première partie intérieure (10) en deux parties se terminant en cône, formant le canal de mesure (13), et une partie extérieure (9) complémentaire à la partie intérieure (10), entourant la partie intérieure (10), au moins deux capteurs de pression (16) ainsi qu'au moins deux sondes de température (17) étant agencés dans la partie intérieure (10) de telle sorte qu'au moins les membranes de mesure des capteurs de pression (16) se terminent en affleurement avec la paroi intérieure du canal de mesure (13).

2. Machine de moulage par injection selon la revendication 1, **caractérisée en ce que** le canal de mesure (13) est configuré sous forme de capillaire à fente de section transversale rectangulaire.

3. Machine de moulage par injection selon l'une quelconque des revendications 1 ou 2, **caractérisée en ce que** la ligne de séparation des deux parties (11, 12) de la première partie intérieure se terminant en cône (10) du boîtier s'étend le long du canal de mesure (13).

4. Machine de moulage par injection selon l'une quelconque des revendications 1 à 3, **caractérisée en ce que** la transition du canal de carotte (4) dans le canal de mesure (13) dans la plaque de montage correspondante (7) est configurée sous forme optimisée en termes de flux.

5. Machine de moulage par injection selon l'une quelconque des revendications 1 à 4, **caractérisée en ce que** les capteurs de pression (16) sont agencés en face des sondes de température (17).

6. Machine de moulage par injection selon l'une quelconque des revendications 1 à 5, **caractérisée en ce que** la partie intérieure (10) du boîtier est montée sur la plaque de montage (8) qui est fixée sur la plaque de serrage mobile (3) et la partie de boîtier extérieure (9) est montée sur la plaque de montage (7) reliée à la plaque de serrage fixe (2).
